(19) Europäisches Patentamt
European Patent Office
Office européen des brevets

(11) **EP 4 543 127 A1**

(12) **EUROPEAN PATENT APPLICATION**

(43) Date of publication:
23.04.2025 Bulletin 2025/17

(21) Application number: 23204935.3

(22) Date of filing: 20.10.2023

(51) International Patent Classification (IPC):
*H04W 74/00* (2009.01)  *H04W 74/0833* (2024.01)

(52) Cooperative Patent Classification (CPC):
**H04W 74/006**; H04W 74/0816

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nokia Technologies Oy**
**02610 Espoo (FI)**

(72) Inventors:
- **HAKOLA, Sami-Jukka**
  **90450 Kempele (FI)**
- **TIIROLA, Esa Tapani**
  **90620 Oulu (FI)**

(74) Representative: **Nokia EPO representatives**
**Nokia Technologies Oy**
**Karakaari 7**
**02610 Espoo (FI)**

(54) **ORGANIZING A SET OF A RANDOM ACCESS CHANNEL OCCASIONS**

(57) The disclosure inter alia pertains to a user equipment comprising means for receiving, from a network device, configuration information organizing a set of a random access channel, RACH, occasions, ROs, into primary and secondary ROs; means for receiving, from the network device, a status indicating whether physical random access channel, PRACH, detection is performed by the network device during the secondary ROs; and means for transmitting a PRACH preamble based on the received configuration information and the received status.

400

transmit configuration information organizing a set of a RACH occasions, ROs, into primary and secondary ROs — 401

determine that load is sufficiently low/high, decide to enter/leave energy saving mode and stop/start performing PRACH detection in one or more secondary ROs — 402

transmit a status indicating whether PRACH detection is performed by the network device for the secondary ROs — 403

perform PRACH detection according to the configuration information and the status — 404

receive information that UEs have tried to perform random access in secondary ROs without success — 405

decide to start performing PRACH detection in one or more secondary ROs — 406

transmit a status indicating whether PRACH detection is performed by the network device for the secondary ROs — 407

Fig.4

**Description**

**TECHNOLOGICAL FIELD**

The present disclosure is related to but not limited to communication networks as defined by the 3GPP standard, such as the 6G standard. The disclosure in particular relates to the use of the random access channel (RACH) and the random access (RA) procedure (also referred to as RACH procedure). More specifically, the disclosure relates to the physical layer design in the context of RA procedures, i.e. the random access channel resource allocation and the design of RACH occasions (ROs).

**BACKGROUND**

A random access (RA) procedure is a procedure whereby a user equipment (UE) initiates a connection with a network for transmitting mobile-originating data or in response to a paging message for receiving mobile-terminating data. The RA procedure is a procedure present in earlier versions of mobile systems including GSM, GPRS, UMTS and LTE, with some changes in messages exchanged between the UE and the network. This procedure is not limited to connection initiation and may be performed for various different reasons, such as a handover to a new cell, the need for uplink synchronization, a scheduling request when no uplink (UL) resources are reserved for the UE (no PUCCH), or for beam recovery.

As this procedure has to be performed many times, aspects such as network energy savings and flexible radio resource utilization are becoming increasingly relevant.

Network energy saving is of great importance for environmental sustainability, to reduce environmental impact (greenhouse gas emissions), and for operational cost savings. As 5G, and in future 6G, are becoming pervasive across industries and geographical areas, handling more advanced services and applications requiring very high data rates (e.g. XR), networks are being denser, use more antennas, larger bandwidths and more frequency bands. The environmental impact of 5G and 6G needs to stay under control.

Energy consumption has become a key part of the operators' OPEX. According to the report from GSMA [1], the energy cost on mobile networks accounts for ~23% of the total operator cost. Most of the energy consumption comes from the radio access network. The power consumption of a radio access can be split into two parts: the dynamic part which is only consumed when data transmission/reception is ongoing, and the static part which is consumed all the time to maintain the necessary operation of the radio access devices, even when data transmission/reception is not on-going. In this invention, the focus is on the latter.

**SUMMARY OF SOME EXEMPLARY EMBODIMENTS**

In view of the above, certain embodiments of the disclosure suggest a random access channel resource allocation. Certain embodiments may enable network energy savings e.g. when the load is low in the system.

Certain embodiments may facilitate a more flexible use of radio resources. More specifically, certain embodiments may dynamically allow for a high PRACH capacity with low initial access latency in certain situations while also allowing for a low network energy consumption in other situations. Certain embodiments may allow for the above effects with a low signaling overhead.

According to a first exemplary aspect, there is disclosed a user equipment. The user equipment may comprise means for receiving, from a network device, configuration information organizing a set of a random access channel, RACH, occasions, ROs, into primary and secondary ROs. The user equipment may further comprise means for receiving, from the network device, a status indicating whether physical random access channel, PRACH, detection is performed by the network device during the secondary ROs. The user equipment may further comprise means for transmitting a PRACH preamble based on the received configuration information and the received status.

According to a second exemplary aspect, there is also disclosed a network device. The network device may comprise means for transmitting, to a user equipment, configuration information organizing a set of a random access channel, RACH, occasions, ROs, into primary and secondary ROs. The network device may further comprise means for transmitting, to the user equipment, a status indicating whether physical random access channel, PRACH, detection is performed by the network device for the secondary ROs. The network device may further comprise means for performing PRACH detection according to the configuration information and the status.

According to each of the exemplary aspects, a respective method is also disclosed.

Thus, according to the first exemplary aspect, there is disclosed a method performed by a user equipment. The method may comprise receiving, from a network device, configuration information organizing a set of a random access channel, RACH, occasions, ROs into primary and secondary ROs. The method may comprise receiving, from the network device, a status indicating whether physical random access channel, PRACH, detection is performed by the network device during the secondary ROs. The method may comprise transmitting a PRACH preamble based on the received configuration information and the received status.

According to the second exemplary aspect, there is also disclosed a method, performed by a network device. The method may comprise transmitting, to a user equipment, configuration information organizing a set of a random access channel, RACH, occasions, ROs into primary and secondary ROs. The method may comprise transmitting, to the user equipment, a status indicating whether physical random access channel, PRACH, detection is performed by the network device for the secondary ROs. The method may comprise performing PRACH detection according to the configuration information and the status.

Any of the disclosed devices (user equipment, network device) may generally be a stationary device or a mobile device. The user equipment may in particular be a terminal device. The user equipment may be a mobile device, such as a smartphone, a tablet, a wearable, smart glasses, a smartwatch, a low power device, an IoT device, an IIoT device, a vehicle, a truck, a drone, an airplane, or the like. Further, the user equipment may also be part of a relaying scenario. That is, the user equipment may also be the mobile termination part of an integrated access and backhaul (IAB) node, as it may perform the user equipment functionalities.

Accordingly, a network device may in particular be understood to be a wireless communication station installed at a fixed or mobile location and may in particular be or comprise an entity of the radio access network of the communication system. For instance, the network device may be, comprise, or be part of a base station of a communication network of any generation (e.g. a 6gNB, gNB, eNodeB, NodeB, BTS or the like) of the 3 GPP standard. Accordingly, the communication system may in particular be a cellular communication system. In an example of a 5G network, the network device may in particular be or comprise a central unit (CU) and/or a distributed unit (DU), such as a gNB-CU and/or gNB-DU. Generally, the network device may be or comprise a hardware or software component implementing a certain functionality. As mentioned, the network device may also be part of a relaying scenario, so that the network device may also be the DU part of an integrated access and backhaul (IAB) node, as it may performs the network device functionalities. In an example, the network device may be an entity as defined by 3GPP 5G or NR standard (also referred to as a gNB). Accordingly, while the network device may be understood to be implemented in or be a single device or module, the network node may also be implemented across or comprise multiple devices or modules. Multiple network device of the exemplary aspect may in particular establish a communication system or network, which may in particular be a NR or 5G system (5GS) or part thereof or any other mobile communications system defined by a past or future standard, in particular successors of the present 3GPP standards, such as the 6G standard. A network device of the exemplary second aspect may be capable of being in direct and/or indirect communication with the exemplary user equipment of the first aspect.

The means or functionality of any of the disclosed user equipment and network device can be implemented in hardware and/or software. They may comprise one or multiple modules or units providing the respective functionality. They may for instance comprise at least one processor for executing instructions for performing the required functions, and at least one memory storing the instructions. Alternatively, they could comprise for instance circuitry that is designed to implement the required functions, for instance implemented in a chipset or a chip, like an integrated circuit. In general, the means may comprise for instance one or more processing means or processors.

Thus, according to the respective exemplary aspects of the present disclosure, there is in each case also disclosed a respective user equipment or network device comprising at least one processor and at least one memory storing instructions that, when executed by the at least one processor, cause the respective apparatus (e.g. the user equipment or the network device) at least to perform a method according to the respective aspect of the present disclosure.

Any of the above-disclosed exemplary aspects may, however, in general be performed by an apparatus, which may be a module or a component for a device, for example a chip. The disclosed apparatus (e.g. the user equipment or network device) may comprise the disclosed components, for instance means, processor, memory, and may further comprise one or more additional components.

According to the exemplary aspects of the present disclosure, there is in each case also disclosed a computer program, the computer program when executed by a processor of a respective apparatus (e.g. the user equipment or network device) causing said apparatus to perform a method according to the respective aspect.

The instructions, for instance processor instructions, may be stored on a storage medium that is readable by a processor, in particular a transitory and/or non-transitory medium. The storage medium could for example be a disk or a memory or the like. The storage medium may be intended for taking part in the operation of a device, like an internal or external memory, for instance a Read-Only Memory (ROM) or a hard disk, or be intended for distribution of a program or library including the instructions, like an optical disc.

The configuration information may organize a set of a random access channel, RACH, occasions, ROs, into primary and secondary ROs. The configuration may be a cell-specific configuration and may be transmitted to multiple or all UEs in the cell. Accordingly, the configuration may be transmitted as a broadcast signal in the respective cell, for instance. A RACH occasion or RO may be understood to be a specific time and/or frequency resource, in which a user equipment may start (or is expected by the network to start) a random access procedure, i.e. to transmit a random access preamble. The primary ROs may be considered to be or referred to as first ROs or ROs of a first type. The secondary ROs may be considered to be or referred to as second ROs or ROs of a second type. Accordingly, the configuration information may configure, for the user equipment, one or multiple primary ROs, and one or more multiple secondary ROs. The configured RACH occasions may be configured for a certain reference period, as will be explained in more detail below. The reference period and the set of ROs configured therein may be repeated. For instance, there may be at least one primary RO and at least one secondary RO in a respective reference period.

As described, the user equipment may receive a status from the network device. The status may indicate whether physical random access channel, PRACH, detection (i.e., PRACH preamble detection) is performed by the network device during the secondary ROs. Generally, the status may indicate whether the PRACH detection is performed for all or for some secondary ROs. The status may thus be considered to be an activation or availability status for one or more of the secondary ROs. In an example, the network device may perform PRACH detection either for all or for none of the secondary ROs, which may then be indicated by the status. In another example, the network device may perform PRACH detection for some of the secondary ROs, and it may then be indicated by the status for which secondary ROs PRACH detection is performed. Thus, in an example, the secondary ROs may be further subdivided in two or more groups of secondary ROs. The status may for instance be a status signaling, which may be transmitted via lower or higher layer signaling. For instance, the network may provision the use of secondary ROs via broadcast and/or dedicated signaling to the user equipment(s), as will be explained in more detail below. The network device may temporarily skip or suspend PRACH detection for one or more (e.g. partially or all) secondary ROs for the purpose of energy saving or for utilizing the resources otherwise. For instance, the secondary ROs may be made only partially available, e.g. the signaling may indicate that some of the secondary ROs are made available for RA procedures and the rest of the ROs may be reserved for other uses. In an example, secondary ROs may be made available only for predefined RACH reasons or RACH types.

The network device may then perform PRACH detection according to the configuration information and the status. Accordingly, the network device may perform PRACH detection on the primary ROs and, depending on the status, may or may not perform PRACH detection on the secondary ROs.

The user equipment may then transmit a PRACH preamble to the network device based on the received configuration information. The user equipment may also utilize the received status indicating whether PRACH detection is performed by the network device during the secondary ROs, e.g. for determining whether to transmit the PRACH preamble on the primary or secondary ROs. The transmission of the PRACH preamble may be part of a 2-step or 4-step RA procedure, as further detailed below.

Accordingly, the network device may then receive, from the user equipment, a PRACH preamble according to the configuration information and the status signaling.

To illustrate the advantage of the present invention, we can consider an example, in which primary ROs may ROs in which the network is always performing PRACH detection. In the example, secondary ROs may be ROs in which the network may not necessarily or may not always be performing PRACH detection. As will also be explained in more detail below, the network may for instance decide, when the load is low, not to perform PRACH detection in secondary ROs and keep radio frequency and baseband parts switched off during the secondary ROs to facilitate energy savings. Due to the transmission of the status, the user equipment will be informed about whether the network will perform PRACH detection only in the primary ROs or in both, the primary and secondary ROs, so that the user equipment can utilize the information in its strategy for deciding which ROs to use for a RA procedure. In addition, the secondary ROs can be radio resources that can be used also for other DL and/or UL signals and channels. For example the user equipment could perform DL reception during secondary ROs in the case of dynamic slot format indication (SFI) or downlink (DL) grant.

In an example, the set of ROs (and thus a respective reference period, for which the set of ROs is configured) may correspond to a physical random access channel, PRACH, configuration period. The PRACH configuration period may for instance be selected from and thus be 10, 20, 40, 80 or 160 msec. In an example, the set of ROs (and thus a respective reference period, for which the set of ROs is configured) may correspond to an association period. The association period may indicate a number of PRACH configuration periods. The association period may for instance indicate 1, 2, 4, 8 or 16 PRACH configuration periods. In an example, the set of ROs (and thus a respective reference period, for which the set of ROs is configured) may correspond to an association pattern period. An association pattern period may include one or more association periods. In an example, the set of ROs (and thus a respective reference period, for which the set of ROs is configured) may correspond to a fixed time period. The fixed time period may be predetermined and set by specifications, or configured via signaling.

In an example, the set of ROs comprises at least one primary RO for each synchronization signaling block, SSB, and/or at least one secondary RO for each SSB. Each SSB typically corresponds to a particular beam (or spatial filter) and respective coverage area, and is identified by a particular SSB index. For instance, for the primary ROs, there may be at least once a primary RO (or a respective set of PRACH resources) for each SSB within a certain period (e.g. a 160 ms period). For instance, for the secondary ROs, there may be one or multiple secondary ROs (or respective sets of PRACH resources) for each SSB within a certain time period (e.g. a 160 ms period).

In an example, the status may be transmitted and received via broadcast signaling. Additionally or alternatively, the status may be transmitted and received via a short paging message. Additionally or alternatively, the status may be transmitted and received via downlink control information (DCI). Additionally or alternatively, the status may be transmitted and received via a group-common downlink control information (DCI). Additionally or alternatively, the status may be transmitted and received via a paging physical downlink shared channel, PDSCH, transmission. Additionally or alternatively, the status may be transmitted and received via dedicated signaling. Generally, the status may be signaled via one or multiple of the aforementioned options.

In an example, primary ROs may be ROs for which the network device is expected to perform PRACH detection. Thus, a user equipment may assume that the network will generally perform PRACH detection for respective primary ROs and can expect that the network will respond to a random access request (except from cases where there is a signaling error or a contention, for instance). Accordingly, in an example, secondary ROs may be ROs for which the network device is not expected to generally or always perform PRACH detection. For instance, the network may temporarily deactivate or skip PRACH detection for some or all secondary ROs. In an example, the secondary ROs are allowed to have a different availability than primary ROs. In particular, in an example, secondary ROs are allowed to have a lower availability than primary ROs. A user equipment may nevertheless try to perform random access procedure on the secondary ROs. However, if a user equipment is aware of the status of the secondary ROs, the user equipment may act accordingly and adapt its strategy regarding whether to use primary or secondary ROs. In an example, primary ROs may be (e.g. time domain) resources usable for uplink (UL) transmission only. In contrast, in an example, secondary ROs may be (e.g. time domain) resources usable for uplink (UL) transmission and downlink (DL) reception. Thus, while the primary ROs may only be used for UL transmission (such as transmission of PRACH preambles), the secondary ROs may also be used for DL reception (e.g. in case no PRACH detection is performed for respective secondary ROs).

In an example, the user equipment may comprise means for transmitting, to the network device, information indicating that a RA procedure using one or more secondary ROs was unsuccessful. Accordingly, in an example, the network device may comprise means for receiving, from the user equipment, information indicating that a RA procedure using one or more secondary ROs was unsuccessful. For instance, the user equipment may attempt performing a RA procedure on respective secondary ROs for a predefined number of times (e.g. once or multiple times, e.g. at least 2, 3, 4 or 5 times). If this is unsuccessful, the user equipment may for instance then attempt performing a RA procedure on the primary ROs. In an example, the information indicating that the RA procedure was unsuccessful may be transmitted as part of a subsequent (e.g. successful) RA procedure, for instance in a Msg3 of a 4-step RA procedure or a MsgA of a 2-step RA procedure. The subsequent RA procedure may be a RA procedure directly subsequent to the one or more unsuccessful RA procedure on the one or more secondary ROs. For instance, the subsequent RA procedure may be performed on a primary RO.

In an example, the network device may comprise means for, responsive to receiving the information indicating that the RA procedure was unsuccessful, starting performing PRACH detection during the secondary ROs. For instance, the network device may start performing PRACH detection during a part or all of the secondary ROs. The network device may consider the information indicating that a RA procedure using one or more secondary ROs was unsuccessful as an indication that the secondary ROs may be needed (e.g. because the load increases and more ROs are required to provide a sufficient number of ROs for the user equipments). When starting (or stopping) performing PRACH detection, the network device may transmit, to the user equipment, a corresponding status indicating that PRACH detection is now performed (or stopped) by the network device for one or more secondary ROs.

In an example, in case the received status indicates that PRACH detection is not performed for secondary ROs by the network device, the PRACH preamble is transmitted on a primary RO. Thus, in case the status received by the user equipment indicates that PRACH detection is not performed for secondary ROs by the network device, the user equipment may assume that a RA procedure on the secondary ROs will likely not be successful. Accordingly, the user equipment may thus directly perform the RA procedure (i.e. transmit the PRACH preamble) on a primary RO.

In an example, in case the received status indicates that PRACH detection is performed for secondary ROs by the network device, the PRACH preamble is transmitted on a primary RO or a secondary RO. Thus, in case the status received by the user equipment indicates that PRACH detection is performed for secondary ROs by the network device, the user equipment may assume that RA procedures on both the primary and the secondary ROs will likely be successful. Accordingly, the user equipment may for instance utilize any of the primary and secondary ROs for performing the RA procedure.

While the disclosure may generally also apply to the concept of a contention-free RA procedure, in an example, the PRACH preamble may be transmitted as part of a contention-based RA procedure. In an example, the PRACH preamble may be transmitted as part of the first step (e.g. MsgA) of a 2-step RA procedure. In an example, the PRACH preamble may be transmitted as part of the first step (Msg1) of a 4-step RA procedure.

The following embodiments are also disclosed:

    1. A user equipment comprising:

    - means for receiving, from a network device, configuration information organizing a set of a random access channel, RACH, occasions, ROs, into primary and secondary ROs;

- means for performing a random access, RA, procedure on a secondary RO based on the received configuration information;
- means for, in case the RA procedure on the secondary RO is unsuccessful, performing an RA procedure on a primary RO based on the received configuration information.

2. The user equipment of embodiment 1, wherein the set of ROs corresponds to one of

- a physical random access channel, PRACH, configuration period;
- an association period;
- an association pattern period; or
- a fixed time period.

3. The user equipment of embodiment 1 or 2, wherein the set of ROs comprises at least one primary RO for each synchronization signaling block, SSB, and/or at least one secondary RO for each synchronization signaling block, SSB.

4. The user equipment of any of the previous embodiments, wherein one or more of the following:

- primary ROs are ROs for which the network device is expected to perform PRACH detection;
- secondary ROs are ROs for which the network device is not expected to always perform PRACH detection;
- secondary ROs are allowed to have a different availability than primary ROs;
- secondary ROs are allowed to have a lower availability than primary ROs;
- primary ROs are time domain resources usable for UL transmission only; and
- secondary ROs are time domain resources usable for UL transmission and DL reception.

5. The user equipment of any of the previous embodiments, wherein performing an RA procedure on a secondary RO based on the received configuration information comprises performing a certain number of RA procedures on respective secondary ROs before performing the RA procedure on the primary RO based on the received configuration information.

6. The user equipment of embodiment 5, wherein one or more of the following:

- the certain number is one or larger than one;
- the certain number is a predefined number; and/or
- the certain number is predefined by specifications.

7. The user equipment of any of the previous embodiments, further comprising:

- means for transmitting, to the network device, information indicating that the performing of an RA procedure using one or more secondary ROs was unsuccessful.

8. The user equipment of embodiment 7, wherein the information indicating that the performing of an RA procedure was unsuccessful is transmitted as part of a subsequent RA procedure.

9. The user equipment of any of the previous embodiments, further comprising:

- means for receiving, from the network device, a status indicating whether physical random access channel, PRACH, detection is performed by the network device during the secondary ROs.

10. The user equipment of embodiment 9, wherein the status is received via one or more of the following:

- broadcast signaling;
- a short paging message;
- downlink control information, DCI;
- a group-common downlink control information, DCI;
- a paging physical downlink shared channel, PDSCH, transmission; or
- dedicated signaling.

11. The user equipment of embodiment 9 or10, comprising:

- means for determining, based on the received status, whether to perform an RA procedure on a secondary RO or on a primary RO.

12. The user equipment of any of embodiments 9-11, wherein one or more of the following:

- in case the received status indicates that PRACH detection is not performed for secondary ROs by the network device, a RA procedure is performed on a primary RO;
- in case the received status indicates that PRACH detection is performed for secondary ROs by the network device, an RA procedure is performed on a primary RO or a secondary RO.

13. The user equipment of any of the previous embodiments, wherein the RA procedure on the first and/or secondary RO is one or more of the following:

- a contention based RA procedure; or
- a 2-step or 4-step RA procedure.

14. A network device comprising:

- means for transmitting, to a user equipment, configuration information organizing a set of a random access channel, RACH, occasions, ROs, into primary and secondary ROs; and
- means for determining whether to perform physical random access channel, PRACH, detection for the secondary ROs.

15. The network device of embodiment 14, wherein said determining whether to perform PRACH detection for the secondary ROs is based on one or more of:

- random access load of the network device;
- initial access load of the network device;
- handover load of the network device; and
- cell load of the network device.

16. The network device of embodiment 14 or 15 further comprising

- means for, in case it is determined to not perform PRACH detection for the secondary ROs, entering an energy saving mode when not performing PRACH detection for the secondary ROs or using time domain resources of the secondary ROs for downlink, DL, transmission.

17. The network device of embodiment 16, wherein the energy saving mode comprises switching off radio frequency parts and/or baseband parts.

18. The network device of any of embodiments 14-17, further comprising:

- means for transmitting, to the user equipment, a status indicating whether physical random access channel, PRACH, detection is performed by the network device for the secondary ROs.

19. The network device of any of embodiments 14-18, wherein the status signaling is transmitted via one or more of the following:

- broadcast signaling;
- a short paging message;
- downlink control information, DCI;
- a group-common downlink control information, DCI;
- a paging physical downlink shared channel, PDSCH, transmission;
- dedicated signaling.

20. The network device of any of embodiments 14-19, wherein is the set of ROs corresponds to one of:

- a physical random access channel, PRACH, configuration period;
- an association period;
- an association pattern period; or
- a fixed time period.

21. The network device of any of embodiments 14-20, wherein the set of ROs comprises at least one primary RO for each synchronization signaling block, SSB, and/or at least one secondary RO for each synchronization signaling block, SSB.

22. The network device of any of embodiments 14-21, wherein one or more of the following:

- primary ROs are ROs for which the network device is expected to perform PRACH detection;
- secondary ROs are ROs for which the network device is not expected to always perform PRACH detection;
- secondary ROs are allowed to have a different availability than primary ROs;
- secondary ROs are allowed to have a lower availability than primary ROs;.
- primary ROs are time domain resources usable for UL transmission only; and
- secondary ROs are time domain resources usable for UL transmission and DL reception.

23. The network device of any of embodiments 14-22, further comprising one or more of the following:

- means for receiving, from the user equipment, information indicating that an RA procedure using one or more secondary ROs was unsuccessful; and
- means for, responsive to receiving the information indicating that the RA procedure was unsuccessful, starting performing PRACH detection during the secondary ROs.

24. The network device of embodiment 23, wherein the information indicating that an RA procedure was unsuccessful is received as part of a subsequent RA procedure.

25. A method, performed by at least one user equipment, the method comprising:

- receiving, from a network device, configuration information organizing a set of a random access channel, RACH, occasions, ROs, into primary and secondary ROs;
- performing a random access, RA, procedure on a secondary RO based on the received configuration information;
- in case the RA procedure on the secondary RO is unsuccessful, performing an RA procedure on a primary RO based on the received configuration information.

26. A method, performed by at least one network device, the method comprising:

- transmitting, to a user equipment, configuration information organizing a set of a random access channel, RACH, occasions, ROs, into primary and secondary ROs; and
- determining whether to perform physical random access channel, PRACH, detection for one or more secondary ROs.

27. Computer program code, the computer program code when executed by a processor of an apparatus causing said apparatus to perform a method of embodiment 25 or 26.

28. Computer storage medium comprising computer program code of embodiment 27.

Furthermore, the following embodiments are also disclosed:

1. A user equipment comprising:

- means for receiving, from a network device, configuration information organizing a set of a random access channel, RACH, occasions, ROs, into primary and secondary ROs;
- means for receiving, from the network device, a status indicating whether physical random access channel, PRACH, detection is performed by the network device during the secondary ROs; and
- means for transmitting a PRACH preamble based on the received configuration information and the received status.

2. The user equipment of embodiment 1, wherein the set of ROs corresponds to one of:

- a PRACH configuration period;
- an association period;
- an association pattern period; or
- a fixed time period.

3. The user equipment of embodiment 1 or 2, wherein the set of ROs comprises at least one primary RO for each synchronization signaling block, SSB, and/or at least one secondary RO for each SSB.

4. The user equipment of any of the previous embodiments, wherein the status is received via one or more of the following:

- broadcast signaling;
- a short paging message;
- downlink control information, DCI;
- a group-common downlink control information, DCI;
- a paging physical downlink shared channel, PDSCH, transmission; or
- dedicated signaling.

5. The user equipment of any of the previous embodiments, wherein one or more of the following:

- primary ROs are ROs for which the network device is expected to perform PRACH detection;
- secondary ROs are ROs for which the network device is not expected to always perform PRACH detection;
- secondary ROs are allowed to have a different availability than primary ROs;
- secondary ROs are allowed to have a lower availability than primary ROs;
- primary ROs are time domain resources usable for UL transmission only; or
- secondary ROs are time domain resources usable for UL transmission and DL reception.

6. The user equipment of any of the previous embodiments, further comprising:

- means for transmitting, to the network device, information indicating that a random access, RA, procedure using one or more secondary ROs was unsuccessful.

7. The user equipment of embodiment 6, wherein the information indicating that the RA procedure was unsuccessful is transmitted as part of a subsequent RA procedure.

8. The user equipment of any of the previous embodiments, wherein one or more of the following:

- in case the received status indicates that PRACH detection is not performed for secondary ROs by the network device, the PRACH preamble is transmitted on a primary RO;
- in case the received status indicates that PRACH detection is performed for secondary ROs by the network device, the PRACH preamble is transmitted on a primary RO or a secondary RO.

9. The user equipment of any of the previous embodiments, wherein the PRACH preamble is transmitted as one or more of the following:

- part of a contention-based RA procedure; or
- part of the first step of a 2-step or 4-step RA procedure.

10. A network device comprising:

- means for transmitting, to a user equipment, configuration information organizing a set of a random access channel, RACH, occasions, ROs, into primary and secondary ROs;
- means for transmitting, to the user equipment, a status indicating whether physical random access channel, PRACH, detection is performed by the network device for the secondary ROs; and
- means for performing PRACH detection according to the configuration information and the status.

11. The network device of embodiment 10, wherein the set of ROs corresponds to one of:

- a PRACH configuration period;
- an association period;
- an association pattern period; or
- a fixed time period.

12. The network device of embodiment 10 or 11, wherein the set of ROs comprises at least one primary RO for each synchronization signaling block, SSB, and/or at least one secondary RO for each SSB.

13. The network device of any of embodiments 10-12 wherein the status is transmitted via one or more of the following:

- broadcast signaling;
- a short paging message;
- downlink control information, DCI;
- a group-common downlink control information, DCI;
- a paging physical downlink shared channel, PDSCH, transmission;
- dedicated signaling.

14. The network device of any of the embodiments 10-13, wherein one or more of the following:

- primary ROs are ROs for which the network device is expected to perform PRACH detection;
- secondary ROs are ROs for which the network device is not expected to always perform PRACH detection;
- secondary ROs are allowed to have a different availability than primary ROs; and
- secondary ROs are allowed to have a lower availability than primary ROs.
- primary ROs are time domain resources usable for UL transmission only; or
- secondary ROs are time domain resources usable for UL transmission and DL reception.

15. The network device of any of embodiments 10-14, further comprising:

- means for receiving, from the user equipment, information indicating that a RA procedure using one or more secondary ROs was unsuccessful; and
- means for, responsive to receiving the information indicating that the RA procedure was unsuccessful, starting performing PRACH detection during the secondary ROs.

16. The network device of embodiment 15, wherein the information indicating that the RA procedure was unsuccessful is received as part of a subsequent RA procedure.

17. A method, performed by at least one user equipment, the method comprising:

- receiving, from a network device, configuration information organizing a set of a random access channel, RACH, occasions, ROs into primary and secondary ROs;
- receiving, from the network device, a status indicating whether physical random access channel, PRACH, detection is performed by the network device during the secondary ROs; and
- transmitting a PRACH preamble based on the received configuration information and the received status.

18. A method, performed by at least one network device, the method comprising

- transmitting, to a user equipment, configuration information organizing a set of a random access channel, RACH, occasions, ROs into primary and secondary ROs;
- transmitting, to the user equipment, a status indicating whether physical random access channel, PRACH, detection is performed by the network device for the secondary ROs; and
- performing PRACH detection according to the configuration information and the status.

19. Computer program code, the computer program code when executed by a processor of an apparatus causing said apparatus to perform a method of embodiment 17 or 18.

20. Computer storage medium comprising computer program code of embodiment 19.

It is to be understood that the presentation of the embodiments disclosed herein is merely by way of examples and non-limiting.

Herein, the disclosure of a method step shall also be considered as a disclosure of means for performing the respective method step. Likewise, the disclosure of means for performing a method step shall also be considered as a disclosure of the method step itself.

Other features of the present disclosure will become apparent from the following detailed description considered in conjunction with the accompanying drawings. It is to be understood, however, that the drawings are designed solely for purposes of illustration and not as a definition of the limits of the present disclosure, for which reference should be made to the appended claims. It should be further understood that the drawings are not drawn to scale and that they are merely intended to conceptually illustrate the structures and procedures described herein.

## BRIEF DESCRIPTION OF THE FIGURES

Fig. 1    shows a schematic diagram illustrating an example radio environment in which exemplary embodiments of the present disclosure may be performed;

Fig. 2    an example embodiment of a RA procedure;

Figs. 3a,b,c    different non limiting examples for the association between SSBs and RACH occasions;

Fig. 4    a flow diagram illustrating a method according to an embodiment of the second example aspect of the disclosure;

Fig. 5    a flow diagram illustrating a method according to an embodiment of the first example aspect of the disclosure;

Fig. 6    shows a schematic diagram illustrating a block diagram of an exemplary embodiment of a terminal device according to the present disclosure;

Fig. 7    shows a block diagram of an exemplary embodiment of a network node; and

Fig. 8    shows a schematic illustration of examples of tangible and non-transitory computer-readable storage media.

## DETAILED DESCRIPTION OF THE FIGURES

The following description serves to deepen the understanding of the present disclosure and shall be understood to complement and be read together with the description of example embodiments of the present disclosure as provided in the above SUMMARY section of this specification.

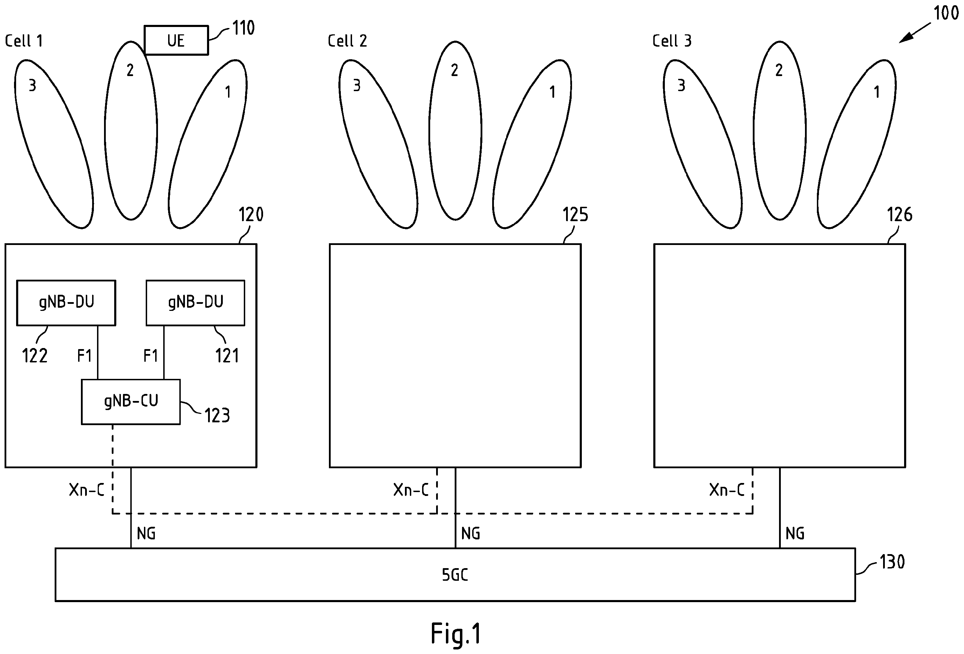

In connection with Fig. 1, an example communication system, in which the present disclosure may be applied, is first described. While the specific radio system in the examples below is a 5G system, this is only to be considered a non-limiting example, and the invention may likewise be employed in past or future generation mobile communication systems or communication systems from a different standard development organization. The disclosure is in particular also applicable to 6G networks. Thus, the term gNB as used in the following shall be understood to also cover future base stations, such as a 6gNB.

Fig. 1 shows a 5G communication network 100, which employs the New Radio (NR) technology and also an architecture for which the different sublayers of the RAN may be split into two logical entities in a communication network control element (like gNB), which are referred to as distributed unit (DU, as an example of a network node according to the present disclosure) and central unit (CU, as a further example of a network node according to the present disclosure). For example, the CU is a logical node that controls the operation of one or more DUs over a front-haul interface (referred to as F1 interface). The DU is a logical node including a subset of the gNB functions, depending on the functional split option. For instance, the layer 1 and layer 2 protocols may be implemented in the DU, while the layer 3 protocols may be implemented in the CU.

As shown in Fig. 1, a first user equipment (UE) 110, as an example of user equipments of the exemplary aspects of the present disclosure, is connected to a cell 1 of a network node or base station, a gNB 120 via a communication beam of the cell 1. In the example shown in Fig. 1, the gNB 120 is provided with a CU 123 and two DUs 121 and 122 being connected to the CU 123 by a F1 interface. Cell 1 may be considered to be a serving cell or source cell for the UE 110. Furthermore, as shown in the example of Fig. 1, there is a plurality of further cells to which the first UE 110 can connect. Similarly to cell 1, cells 2 and 3 are controlled by gNBs 125 and 126, respectively. Each gNB may provide one or more cells, and may further provide a plurality of beams within each cell for coverage enhancement. As shown in Fig. 1, each base station or gNB is connected to a core network 130, such as a 5GC, via respective interfaces, indicated as NG interfaces. Furthermore, each gNB is connected with each other by means of a specific interface, which is referred to e.g. as an Xn-C interface. Any of these network entities, such as the gNB, gNB-DU, gNB-CU and/or 5GC, may individually or together be an example of a network node according to the present disclosure.

The UE 110 may perform a random access procedure with the network (e.g. with the base station, gNB, 6gNB, etc.) for various reasons such as accessing the network.

Generally, a RA procedure may be categorized into contention based random access (CBRA) and contention free random access (CFRA). The different aspects may generally be employed in CFRA and CBRA. The disclosed aspects may be specifically advantageous for use in CBRA, which will be explained in more detail in the following. Accordingly, it is understood that the following features described with respect to random access procedures may be exemplary features of the aspects disclosed herein.

In contention based RA, the UE may select a preamble randomly from a pool of preambles shared with other UEs. This means that the UE has a potential risk of selecting the same preamble as another UE and subsequently may experience conflict or contention. The gNB uses a contention resolution mechanism to handle this type of access requests. In this procedure, not all random access procedures succeed.

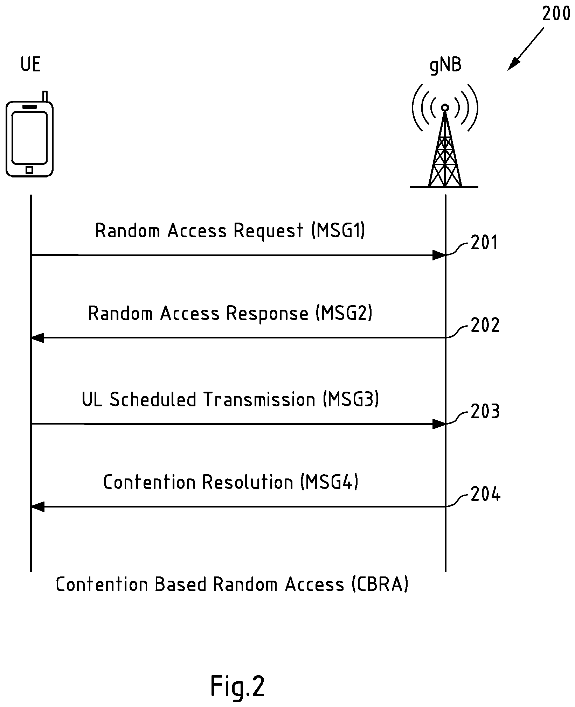

Fig. 2 shows a signaling chart 200 for a 4-step CBRA procedure.

In a first step 201, a UE 210 performs a PRACH preamble transmission (so called "Msg1") to a gNB 220. The UE may transmit the PRACH preamble using a particular transmit beam or transmit spatial filter in correspondence with a particular receive beam or receive spatial filter of the gNB. In other words, the preamble may be considered to be associated with a certain synchronization signal block, SSB and a certain beamforming configuration for this SSB.

In a second step 202, the UE receives a random access response (so called "Msg2"). Upon receiving the PRACH preamble, the gNB sends an RA response over the physical downlink shared channel (PDSCH) scheduled via the physical downlink control channel (PDCCH). The response may contain the RA preamble identifier, timing alignment information, initial uplink grant, and/or a temporary C-RNTI. One PDSCH can carry RA responses to multiple UEs. Thus, after the UE has send the PRACH preamble, it monitors the PDCCH and waits for an RA response within an RA response window. If the UE receives a response containing an RA-preamble identifier corresponding to the transmitted RA preamble, then the response is successful. If the UE does not receive a response within the RA response window or fails to verify the response, the response is unsuccessful. The UE may retry the RA procedure, for instance as long as the number of RA attempts is smaller than a predefined upper limit, e.g. 10. Otherwise, the random access procedure may be considered to have failed.

In a third step 203, the UE may perform a scheduled UL transmission (so called "Msg3") over a physical uplink shared channel (PUSCH). The signaling messages and information sent by the UE may vary across different RA scenario. For instance, in case of an initial radio resource control (RRC) connection setup, a RRCSetupRequest message carrying a non-access stratum (NAS) UE_ID may be transmitted over the common control channel (CCCH) in transparent mode (TM)) at the radio link control (RLC) protocol layer. The message is not segmented. For instance, in case of an RRC connection reestablishment, a RRC Reestablishment Request message may be transmitted over the CCCH in TM at the RLC protocol layer. The message is not segmented. For instance, in case of a handover, a contention-based RA (instead of non-contention-based RA) may be triggered if the UE accesses the target cell and no dedicated preambles are available during the handover. The RRC Handover Confirm message and cell radio network temporary identifier (C-RNTI) may be transmitted over the dedicated control channel (DCCH). If required, a buffer status report (BSR) may also be embedded in the UL transmission. In case of other scenarios, at least the C-RNTI of the UE may be transmitted.

In a fourth step 204, contention resolution may be performed (so called "Msg4"). After the UE has send the Msg3, a contention resolution timer (e.g. of 4 ms) may be started. The gNB may assist the UE in contention resolution using the C-RNTI on the PDCCH or using the UE Contention Resolution Identity IE on the PDSCH. The UE may keep monitoring the PDCCH before the timer expires, and considers the contention resolution successful and stops the timer if either of the following conditions is met:

- The UE obtains the C-RNTI over the PDCCH.

- The UE obtains the temporary C-RNTI over the PDCCH and the medium access control (MAC) protocol data unit (PDU) is successfully decoded. Specifically, the UE Contention Resolution Identity IE received over the PDSCH is the same as the one carried in Msg3 sent by the UE.

If the contention resolution timer expires, the UE may consider the contention resolution failed. Then, the UE may perform another RA attempt, e.g. if the number of RA attempts has not reached the upper limit (such as 10). However, if the number of RA attempts has reached the upper limit, the random access procedure may be considered failed.

In the following different exemplary RACH scenarios are briefly described. The disclosed aspects may be employed in one or multiple of the below exemplary scenarios 1 to 10.

- Case 1: RA may be performed for initial RRC connection setup, for which contention based random access may be employed.
- Case 2: RA may be performed for an RRC connection re-establishment, for which contention based random access may be employed.
- Case 3: RA may be performed for a handover. While the first choice is to use non-contention based random access, CBRA may be used if all dedicated preambles are already being used.
- Case 4: RA may be performed for downlink data arrival (PDCCH order). While the first choice is to choose non-contention based random access, CBRA may be used if all dedicated preambles are already being used.
- Case 5: RA may be performed for uplink data arrival, for which contention based random access may be employed.
- Case 6: RA may be performed for uplink data arrival during RRC_CONNECTED when no PUCCH resources for SR available, for which contention based random access may be employed.
- Case 7: RA may be performed in case of a scheduling request failure, for which contention based random access may be employed.
- Case 8: RA may be performed for the transition from RRC INACTIVE to RRC_CONNECTED. While the first choice is to choose non-contention based random access, CBRA can be used if all dedicated preambles are already being used.
- Case 9: RA may be performed for a request for specific system information (On Demand SI), for which non-contention based random access may be employed.
- Case 10: RA may be performed for NR cell addition for NSA networking, for which non-contention based random access may be employed.
- Case 10: RA may be performed for beam recovery, for which non-contention based random access may be employed, but CBRA may be used, e.g. if all dedicated preambles are already being used.

In the following further information is on the PRACH preamble (i.e. "Msg1") resources. The described features may also be combined with the aspects of the present disclosure.

In NR, transmit and receive beamforming at the gNB is supported for both SSB transmissions and PRACH preamble receptions, respectively. To facilitate transmit beamforming for the SSB, the gNB can transmit multiple SSBs in a cell. Depending on the carrier frequency range there is a maximum number of SSBs that can be supported per cell. The following table shows the FR1 and FR2 options in NR but also provides expected parameters e.g. for the new 6G band 7-20 GHz.

| | FR1 | | | | FR3 | | FR2-1 | | FR2-2 | | |
|---|---|---|---|---|---|---|---|---|---|---|---|
| SSB SCS [kHz] | 15 | | 30 | | 30 | 60 | 120 | 240 | 120 | 480 | 960 |
| Frequency range [GHz] | 0-3 | 3-6 | 0-6 | 3-6 | 6.4 - 8.5, 10-15 | 6.4 - 8.5, 10-15 | 24 - 52.6 | 24 - 526 | 52.6 - 71 | 52.6 - 71 | 52.6-71 |
| Max num of SSBs | 4 | 8 | 4 | 8 | 8 | 16/(32) | 64 | 64 | 64 | 64 | 64 |
| Length of SS burst [ms] | 2 | 4 | 1 | 2 | 2 | 2/4 | 4 | 2 | 4 | 1 | 0,5 |
| Phase noise issue | No | No | No | No | No | No | No | No | No | No | No |
| Other SL channels (PDCCH/PDSCH for SIB, paging, RAR) | 15, 30 | 15, 30 | 15, 30 | 15, 30 | 30 | 60 | 120 | 60, 120 | 120 | 480 | 960 |

To support receive beamforming for the PRACH preambles, different PRACH resources may be associated to the various SSBs. In other words, the UE may select the PRACH preamble and/or RACH occasion (time and frequency resource on which the preamble is transmitted) based on the selected SSB. The UE may select the SSB which is strong enough in terms of L1-RSRP measurement. For that, as said, PRACH resources, i.e. PRACH preambles and/or PRACH occasions, may have association to the SSBs.

A UE may be provided a number N of SS/PBCH blocks associated with one PRACH occasion and a number R of contention based preambles per SS/PBCH block per valid PRACH occasion by ssb-perRACH-OccasionAndCB-PreamblesPerSSB in RACH-ConfigCommon.

For the case of N < 1: one SS/PBCH block is mapped to 1/N consecutive valid PRACH occasions, and R contention based preambles with consecutive indexes associated with the SS/PBCH block per valid PRACH occasion start from preamble index 0.

For the case of N $\geq$ 1: N SS/PBCH blocks are associated with one PRACH occasion, and each SSB is associated with R preambles, with index starts from $n \cdot N_{preamble}^{total}/N$, where $N_{preamble}^{total}$ is provided by *totalNumberOfRA-Preambles* in RACH-ConfigCommon and is an integer multiple of N, $0 \leq n \leq$ N-1.

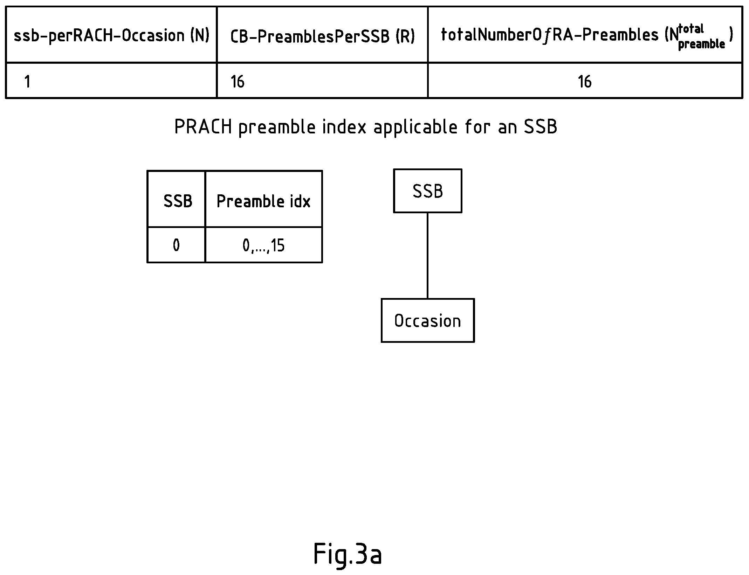

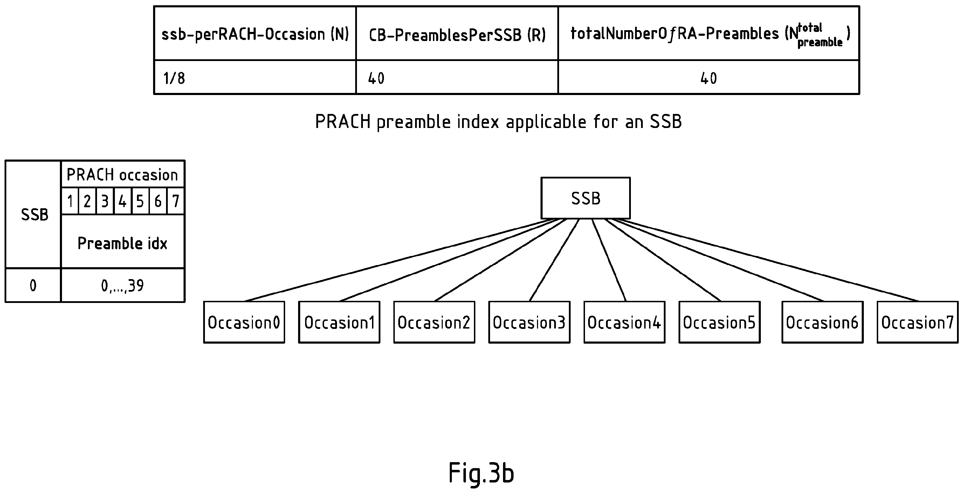

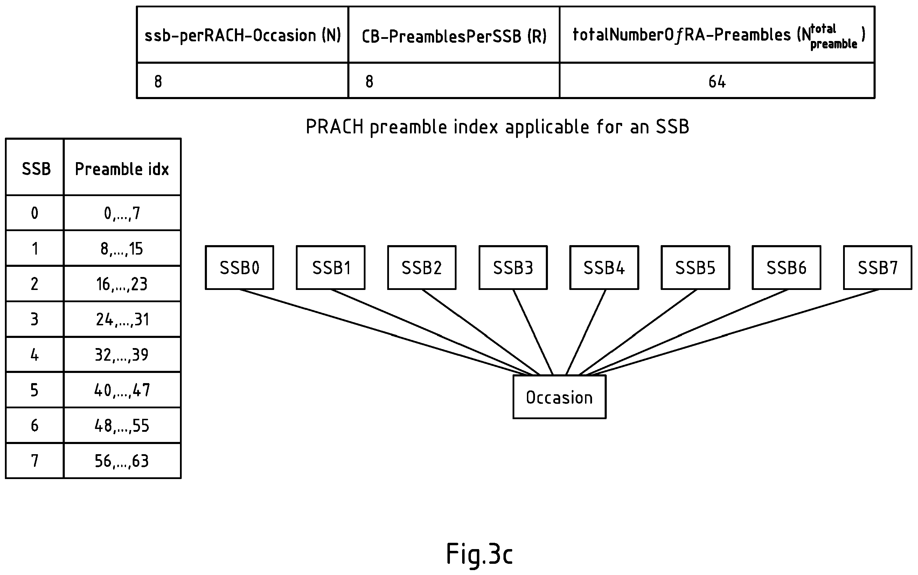

For further illustration, Fig. 3a,b,c show different non limiting examples for the association between SSBs and RACH occasions, namely for N = 1, R = 16, $N_{preamble}^{total} = 16$ in Fig3a, for N = 1/8, R = 40, $N_{preamble}^{total} = 40$ in Fig. 3b, and for N = 8, R = 8, $N_{preamble}^{total} = 64$ in Fig. 3c.

SS/PBCH block indexes may be provided by ssb-PositionsInBurst in SIB 1 or in ServingCellConfigCommon and may be mapped to valid PRACH occasions in the following order:

1. in increasing order of preamble indexes within a single PRACH occasion. Defined by N, which is ssb-perRACHOccasion. If N < 1, 1 / N SSBs will be mapped to one PRACH occasion.
2. in increasing order of frequency resource indexes for frequency multiplexed PRACH occasions. If msg1-FDM (possible values may be 1, 2, 4, 8) in RACH-ConfigGeneric > 1, there will be multiple PRACH occasions in one time instance, multiplexed in frequency domain.
3. in increasing order of time resource indexes for time multiplexed PRACH occasions within a PRACH slot. The time domain PRACH configuration is indicated by prach-ConfigurationIndex in RACH-ConfigGeneric, which is an index to the configuration tables defined in TS 38.211 clause 6.3.3.2.
4. in increasing order of indexes for PRACH slots.

For the PRACH resource allocation the following definitions may apply. An association period may start from frame 0. An association period, for mapping SS/PBCH blocks to PRACH occasions, may be the smallest value in the set determined by the PRACH configuration period according to Table 8.1-1 repeated below (corresponding Table 8.1-1 in 3GPP TS 38.213) such that $N_{TX}^{SSB}$ SS/PBCH blocks are mapped at least once to the PRACH occasions within the association period. $N_{TX}^{SSB}$ may be obtained from the value of ssb-PositionsInBurst in SIB1 or in ServingCellConfig-Common. If after an integer number of SS/PBCH blocks to PRACH occasions mapping cycles within the association period, there is a set of PRACH occasions or PRACH preambles that are not mapped to $N_{TX}^{SSB}$ SS/PBCH blocks, no SS/PBCH blocks may be mapped to the set of PRACH occasions or PRACH preambles. An association pattern period may include one or more association periods and may be determined so that a pattern between PRACH occasions and SS/PBCH blocks repeats at most every 160 msec. PRACH occasions not associated with SS/PBCH blocks after an integer number of association periods, if any, may not be used for PRACH transmissions.

| PRACH configuration period (msec) | Association period (number of PRACH configuration periods) |
|---|---|
| 10 | {1, 2, 4, 8, 16} |
| 20 | {1, 2, 4,8} |
| 40 | {1, 2, 4} |
| 80 | {1, 2} |
| 160 | {1} |

Thus, the PRACH resources may be allocated across a 160 ms period. The following table illustrates an example of the allocation principle where number of SSBs is 6, PRACH configuration period is 80 ms and PRACH configuration index is 9 (below table shows PRACH configuration index 9).

| Radio frame (10 ms) | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| Slot index in radio frame | 7 | 7 | 7 | 7 | 7 | 7 | | | 7 | 7 | 7 | 7 | 7 | 7 | | |
| RO for SSB index | 0 | 1 | 2 | 3 | 4 | 5 | | | 0 | 1 | 2 | 3 | 4 | 5 | | |

The following table may be considered as a generalization of the PRACH resource allocation principle within a 160 ms RACH allocation pattern period (as a non-limiting example) where SSBs are having associated ROs four times (as a non-limiting example) within said 160 ms. In the table "1" indicates the ROs for SSBs first time within the 160ms, "2" indicates the ROs for SSBs second time within the 160ms, "3" indicates the ROs for SSBs third time within the 160ms, "4" indicates the ROs for SSBs fourth time within the 160ms.

| Radio frame (10 ms) | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| | | 1 | | 1 | | 2 | | 2 | | 3 | | 3 | | 4 | | 4 | |

The network energy consumption in low system load coming from the PRACH reception in all the allocated ROs may be a problem. PRACH detection is rather complex operation and in low load situations may cause relatively high energy consumption. Below table illustrates the base station's power consumption model defined in 3GPP Release 18 Study Item on Network Energy Saving (3GPP TR 38.864). From that, it can be seen that there is a significant difference in gNB power consumption between the states of active UL reception and light or deep sleep (when there is no active UL reception). Accordingly, it would be desirable to allow a base station to use a lower power state for as much time as possible.

| Power state | Characteristic | Relative power per slot (vs. deep sleep) | | | | | | Total transition time | | Additional transition time [relative power *ms] | |
|---|---|---|---|---|---|---|---|---|---|---|---|
| | | BTS Category 1 | | | BTS Category 1 | | | | | | |
| | | Set 1 | Set 2 | Set 3 | Set 1 | Set 2 | Set 3 | Cat.1 | Cart.2 | Cat.1 | Cat.2 |
| Deep sleep | | 1 | 1 | 1 | 1 | 1 | 1 | 50ms | 10s | 1000 | 17000 |
| Light sleep | There is neither DL transmission nor UL reception | 25 | 25 | 25 | 2.1 | 2.1 | 2.1 | 6ms | 640ms | 90 | 1088 |
| Micro sleep | | 55 | 50 | 38 | 5.5 | 5 | 3 | 0 ms | | 0 | |
| Active UL | There is UL reception | 110 | 90 | 80 | 6.5 | 5.8 | 4.2 | | | | |
| Active DL | There is DL transmission | 280 | 200 | 152 | 32 | 26 | 176 | | | | |

While it would be possible to allocate PRACH resource only in the beginning of the 160 ms in order to obtain longer periods of inactivity, the disadvantage would be that this would have a big impact on initial access latency in high load situations. Furthermore, it is to be noted that in NR it is not possible to use radio resources semi-statically allocated for ROs for any other signals or channels making the radio resource utilization inflexible from that perspective.

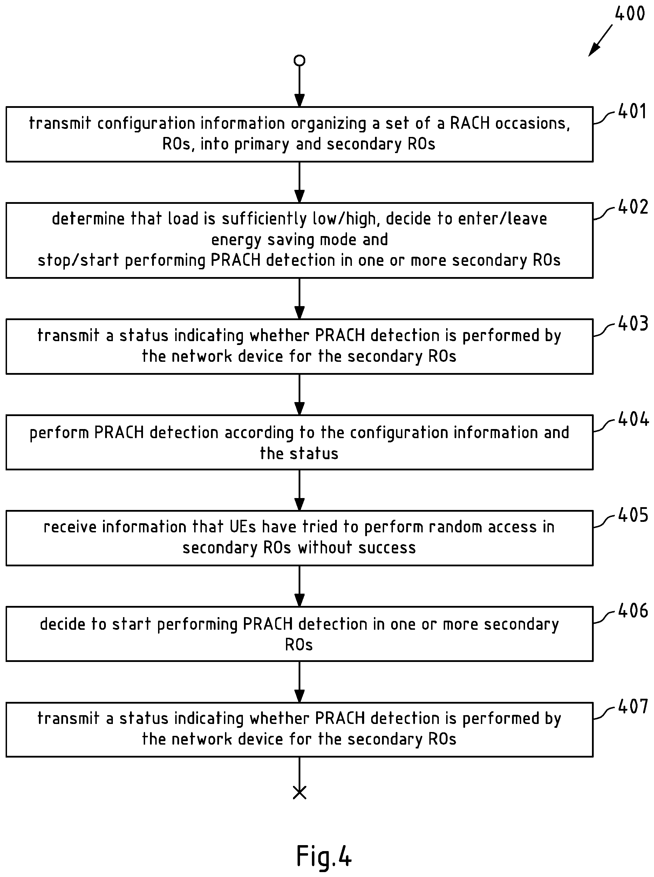

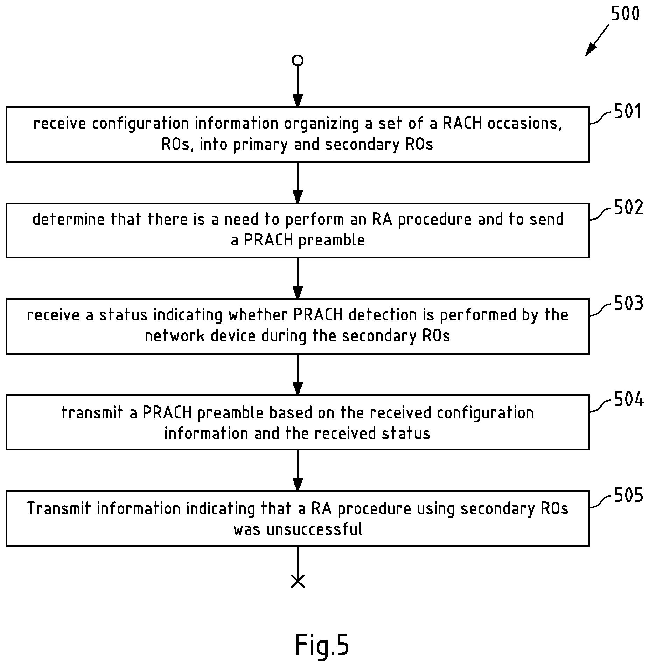

Examples of the disclosed aspects which may be employed and improve the above described random access resource allocation will now be described in more detail with respect to Figs. 4 and 5.

Fig. 4 shows a flow diagram 400 illustrating an example method performed by a network device, such as a gNB or 6gNB for implementing the second example aspect of the disclosure.

The network device configures RACH resources in the cell and may provide the configuration to one or more UEs, e.g. via broadcast signaling (e.g. as system information) to all UEs and/or via dedicated signaling to connected UEs, action 401. The configuration information organizes a set of a random access channel, RACH, occasions, ROs, into primary and secondary ROs, i.e. the configuration comprises both primary ROs and secondary ROs. As an example, in primary ROs there may be at least once the set of PRACH resources for each SSB within a reference period, such as a 160 ms period. In secondary ROs there may be one or multiple sets of PRACH resources for each SSB within the refence period, i.e. the 160 ms period, for instance.

The network device may determine that the load (e.g. a random access load, a cell load, an initial access load and/or a handover load of the network device) is sufficiently low (e.g. below a threshold) and may therefore decide to change to an energy saving mode (such a micro sleep, light sleep or deep sleep) and may therefore stop performing PRACH detection in one or more secondary ROs, action 402. However, there may be reasons other than a sufficiently low load for the network device to stop performing PRACH detection on the secondary ROs. Likewise, the network device may determine that the load (e.g. a random access load, a cell load, an initial access load and/or a handover load of the network device) is sufficiently high (e.g. above a threshold) and may therefore decide to leave the energy saving mode and an enter an active mode and may start performing PRACH detection in one or more secondary ROs, action 402. However, there may be reasons other than a sufficiently high load for the network device to start performing PRACH detection on the secondary ROs, such as an indication by a UE that a RA procedure on a secondary RO was unsuccessful, as explained below.

In any case, the network device may signal the decision by transmitting the status of the PRACH detection for the secondary ROs to specific or all UEs, action 403. In one example, the status may be transmitted via broadcast signaling, e.g. via a short paging message transmitted using a certain DCI format (PDCCH only). In one example, the status may be transmitted via a paging PDSCH transmission. In one example, the status may be transmitted via dedicated signaling to connected UEs.

The network device may perform PRACH detection according to the transmitted configuration information and the transmitted status, action 404.

In one example, the network device may receive information from one or multiple UEs (for instance in a Msg3 of an RA procedure) that they have tried to perform random access in one or more secondary ROs without success, action 405. In response thereto, the network device may decide to start performing PRACH detection in one or more secondary ROs, action 406.

As before, the network device may signal the decision, i.e. the changed status indicating the PRACH detection for the secondary ROs, to respective UEs, action 407. As already described with respect to action 403, the network device may use broadcast signaling or dedicated signaling for transmitting the status to respective UEs.

Fig. 5 shows a flow diagram 500 illustrating an example method performed by a user equipment for implementing the first example aspects of the disclosure.

In correspondence with action 401 of Fig. 4, the UE may receive a RACH configuration information organizing a set of a random access channel, RACH, occasions, ROs, into primary and secondary ROs, action 501, which may be received as broadcast signaling (e.g. via system information) or as dedicated signaling. Thus, the configuration comprises both primary ROs and secondary ROs. As already stated above, in an example, for primary ROs, there may be at least one set of PRACH resources for each SSB within a reference period, such as a 160 ms period. For secondary ROs, there may be one or multiple sets of PRACH resources for each SSB within the reference period, such as the 160 ms period.

The UE may then determine that there is a need to perform an RA procedure and to send a PRACH preamble, action 502. This may for instance be the case for any of the above 10 mentioned RACH scenarios or cases (such as initial access, connection re-establishment, handover etc.).

The UE may further receive, from the network device, a status indicating whether physical random access channel, PRACH, detection is performed by the network device during the secondary ROs, action 503. This information may be exploited for transmitting the PRACH preamble, i.e. the UE may utilize this information by transmitting a PRACH preamble not only based on the received configuration information but also on the received status, action 504.

More specifically, in one case, the UE may receive an indication from the network device, that PRACH detection is not performed on secondary ROs. The UE may use this information and transmit the next PRACH preamble on a primary RO. In the other case, the UE may receive an indication from the network device that PRACH detection is performed on secondary ROs. Accordingly, the UE may use this information and determine that it can transmit PRACH preambles on primary and secondary ROs. Accordingly, the UE may transmit the next PRACH either on a primary RO or on a secondary RO, e.g. depending on the timing, which ever RO can be used first.

However, it is noted that, generally, the UE may attempt to transmit a respective PRACH preamble via any of the primary ROs or secondary ROs based on the received configuration information, and also irrespective of a received status on whether PRACH detection is active on the secondary ROs. The selection which RO(s) to use for a RA attempt may be up to the UE. For instance, considering the case that the UE has not received any status regarding the PRACH detection on the secondary ROs, the UE may perform a RA attempt by transmitting a PRACH preamble on a secondary RO. In case, the UE but fails to receive a random access response after one or more RA attempts on secondary ROs, the UE may decide for the next attempt to transmit the PRACH preamble on the next primary RO and without any further RA attempt on a secondary RO. In case the RA procedure on the primary RO is successful and the UE received a random access response from the network device, the UE may further indicate to the network (e.g. in UL PUSCH transmission, such as Msg3) that it has previously performed a RA attempt on a secondary RO without success, action 505. This may then lead to the network device to start performing PRACH detection on secondary ROs, as described with respect to actions 405, 406 of Fig. 4.

Generally, the above described approach offers various advantages. When PRACH detection on secondary ROs is performed, the system can offer a high PRACH capacity with low initial access latency at the costs of high(er) network energy consumption. However, when no PRACH detection on secondary ROs is performed, the system can allow for a low network energy consumption. While this may lead to low(er) PRACH capacity with higher initial access latency, this may be acceptable in certain scenarios (e.g. low load scenarios). While the same effect could be achieved via a reconfiguration of the RACH configuration via SIB 1 provisioning in the cell, the proposed solution has the advantage that it provides a significantly more lightweight and flexible procedure with lower signaling overhead.

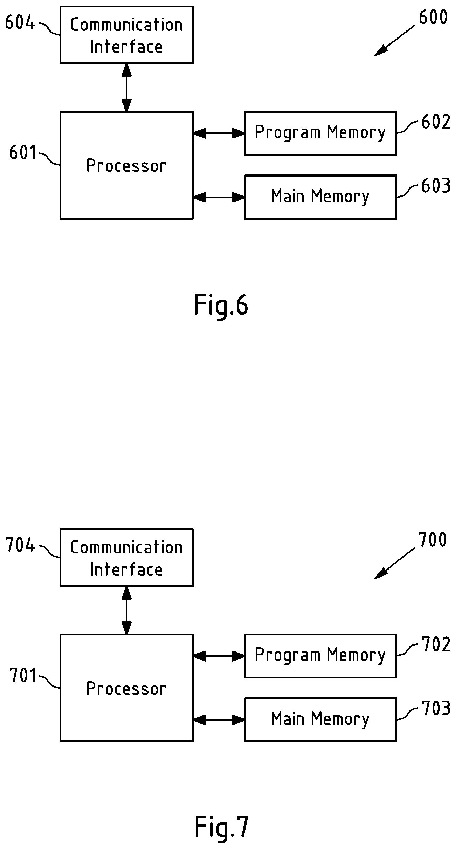

Turning now to Fig. 6, there is shown a block diagram of an exemplary embodiment of a user equipment 600 according to the present disclosure. For example, user equipment 600 may be one of a smartphone, a tablet computer, a notebook computer, a smart watch, a smart band, an LPWAN device, an IoT device, an eMTC device or a vehicle or a part thereof.

User equipment 600 comprises a processor 601. Processor 601 may represent a single processor or two or more processors, which are for instance at least partially coupled, for instance via a bus. Processor 601 executes a program code stored in program memory 602 (for instance program code causing user equipment 600 in connection with a network device or base station) to perform one or more of the embodiments of a method according to the present disclosure or parts thereof, when executed on processor 601, and interfaces with a main memory 603. Program memory 602 may also contain an operating system for processor 601. Some or all of memories 602 and 603 may also be included into processor 601.

One of or both of a main memory and a program memory of a processor (e.g. program memory 602 and main memory 603) could be fixedly connected to the processor (e.g. processor 601) or at least partially removable from the processor, for instance in the form of a memory card or stick.

A program memory (e.g. program memory 602) may for instance be a non-volatile memory. It may for instance be a FLASH memory (or a part thereof), any of a ROM, PROM, EPROM, MRAM or a FeRAM (or a part thereof) or a hard disc (or a part thereof), to name but a few examples. For example, a program memory may for instance comprise a first memory section that is fixedly installed, and a second memory section that is removable from, for instance in the form of a removable SD memory card.

A main memory (e.g. main memory 603) may for instance be a volatile memory. It may for instance be a DRAM memory, to give non-limiting example. It may for instance be used as a working memory for processor 601 when executing an operating system, an application, a program, and/or the like.

Processor 601 further controls a communication interface 604 (e.g. radio interface) configured to receive and/or transmit data and/or information. For instance, communication interface 604 may be configured to transmit and/or receive radio signals from a network node, such as a base station, in particular as described herein. It is to be understood that any computer program code based processing required for receiving and/or evaluating radio signals may be stored in an own memory of communication interface 604 and executed by an own processor of communication interface 604 and/or it may be stored for example in memory 603 and executed for example by processor 601.

Additionally, the communication interface 604 may further comprise a BLE and/or Bluetooth radio interface including a BLE transmitter, receiver or transceiver. For example, radio interface 604 may additionally or alternatively comprise a WLAN radio interface including at least a WLAN transmitter, receiver or transceiver.

The components 602 to 604 of user equipment 600 may for instance be connected with processor 601 by means of one or more serial and/or parallel busses.

It is to be understood that user equipment 600 may comprise various other components. For example, user equipment 600 may optionally comprise a user interface (e.g. a touch-sensitive display, a keyboard, a touchpad, a display, etc.).

Fig. 7 is a block diagram of an exemplary embodiment of a network device 700, such as a base station (in particular a gNB or 6gNB). For instance, network device 700 may be configured for scheduling and/or transmitting signals to the user equipment(s), as described above.

Network device 700 comprises a processor 701. Processor 701 may represent a single processor or two or more processors, which are for instance at least partially coupled, for instance via a bus. Processor 701 executes a program code stored in program memory 702 (for instance program code causing network device 700 to perform alone or together with the user equipment 600 embodiments according to the present disclosure or parts thereof), and interfaces with a main memory 703.

Program memory 702 may also comprise an operating system for processor 701. Some or all of memories 702 and 703 may also be included into processor 701.

Moreover, processor 701 controls a communication interface 704 which is for example configured to communicate according to a cellular communication system like a 2G/3G/4G/5G cellular communication system. Communication interface 704 of network device 700 may be realized by radio heads for instance and may be provided for communication between network node and the user equipment, as described above.

The components 702 to 704 of network device 700 may for instance be connected with processor 701 by means of one or more serial and/or parallel busses.

It is to be understood that user equipment 600 and network device 700 may comprise various other components.

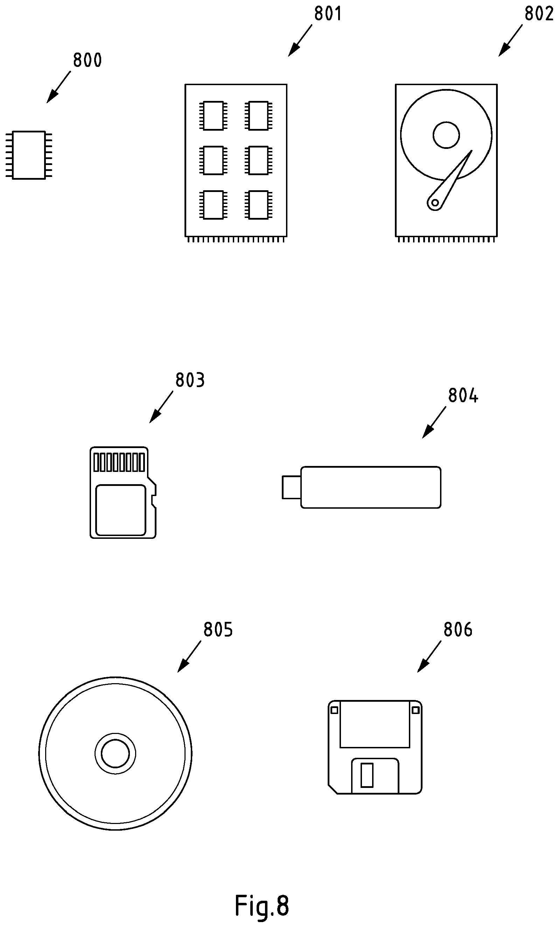

Fig. 8 is a schematic illustration of examples of tangible and non-transitory computer-readable storage media according to the present disclosure that may for instance be used to implement memory 602 of Fig. 6 or memory 702 of Fig. 7. To this end, Fig. 8 displays a flash memory 800, which may for instance be soldered or bonded to a printed circuit board, a solid-state drive 801 comprising a plurality of memory chips (e.g. Flash memory chips), a magnetic hard drive 802, a Secure Digital (SD) card 803, a Universal Serial Bus (USB) memory stick 804, an optical storage medium 805 (such as for instance a CD-ROM or DVD) and a magnetic storage medium 806.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:

(a) hardware-only circuit implementations (such as implementations in only analog and/or digital circuitry)
(b) combinations of circuits and software (and/or firmware), such as: (i) to a combination of processor(s) or (ii) to sections of processor(s)/ software (including digital signal processor(s)), software, and memory(ies) that work together to cause an apparatus, such as a mobile phone, to perform various functions) and
(c) to circuits, such as a microprocessor(s) or a section of a microprocessor(s), that re-quire software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processors 601 and 701 of Figs. 6 and 7, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

Moreover, any of the actions described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The wording "A, or B, or C, or a combination thereof' or "at least one of A, B and C" may be understood to be not exhaustive and to include at least the following: (i) A, or (ii) B, or (iii) C, or (iv) A and B, or (v) A and C, or (vi) B and C, or (vii) A and B and C.

It will be understood that the embodiments disclosed herein are only exemplary, and that any feature presented for a particular exemplary embodiment may be used with any aspect of the present disclosure on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

## LIST OF ABBREVIATIONS

| | |
|---|---|
| 5GC | 5G Core |
| 6gNB | 6G NodeB |
| BS | Base Station |
| BSR | Buffer Status Report |

| CBRA | Contention Based Random Access |
|---|---|
| CCCH | Common Control Channel |
| CFRA | Contention Free Random Access |
| C-RNTI | Cell Radio Network Temporary Identifier |
| CU | Central Unit |
| DCCH | Dedicated Control Channel |
| DCI | Downlink Control Information |
| DL | Downlink |
| DU | Distributed Unit |
| gNB | 5G NodeB |
| L1-RSRP | Layer 1 Reference Signal Received Power |
| MAC | Medium Access Control |
| PBCH | Physical Broadcast Channel |
| PDCCH | Physical Downlink Control Channel |
| PDU | Protocol Data Unit |
| PRACH | Physical Random Access Channel |
| PUCCH | Physical Uplink Control Channel |
| PUSCH | Physical Uplink Shared Channel |
| RA | Random Access |
| RACH | Random Access Channel |
| RF | Radio Frequency |
| RLC | Radio Link Control |
| RRC | Radio Resource Control |
| RO | RACH Occasion |
| SIB | System Information Block |
| SR | Scheduling Request |
| SSB | Synchronization Signal and PBCH Block |
| TM | Transparent Mode |
| UE | User Equipment |
| UL | Uplink |

**Claims**

1. A user equipment comprising:

   - means for receiving, from a network device, configuration information organizing a set of a random access channel, RACH, occasions, ROs, into primary and secondary ROs;
   - means for receiving, from the network device, a status indicating whether physical random access channel, PRACH, detection is performed by the network device during the secondary ROs; and
   - means for transmitting a PRACH preamble based on the received configuration information and the received status.

2. The user equipment of claim 1, wherein the set of ROs corresponds to one of:

   - a PRACH configuration period;
   - an association period;
   - an association pattern period; or
   - a fixed time period.

3. The user equipment of claim 1 or 2, wherein the set of ROs comprises at least one primary RO for each synchronization signaling block, SSB, and/or at least one secondary RO for each SSB.

4. The user equipment of any of the previous claims, wherein the status is received via one or more of the following:

   - broadcast signaling;
   - a short paging message;
   - downlink control information, DCI;
   - a group-common downlink control information, DCI;

- a paging physical downlink shared channel, PDSCH, transmission; or
- dedicated signaling.

5. The user equipment of any of the previous claims, wherein one or more of the following:

- primary ROs are ROs for which the network device is expected to perform PRACH detection;
- secondary ROs are ROs for which the network device is not expected to always perform PRACH detection;
- secondary ROs are allowed to have a different availability than primary ROs;
- secondary ROs are allowed to have a lower availability than primary ROs;
- primary ROs are time domain resources usable for UL transmission only; or
- secondary ROs are time domain resources usable for UL transmission and DL reception.

6. The user equipment of any of the previous claims, further comprising:

- means for transmitting, to the network device, information indicating that a random access, RA, procedure using one or more secondary ROs was unsuccessful.

7. The user equipment of claim 6, wherein the information indicating that the RA procedure was unsuccessful is transmitted as part of a subsequent RA procedure.

8. The user equipment of any of the previous claims, wherein one or more of the following:

- in case the received status indicates that PRACH detection is not performed for secondary ROs by the network device, the PRACH preamble is transmitted on a primary RO;
- in case the received status indicates that PRACH detection is performed for secondary ROs by the network device, the PRACH preamble is transmitted on a primary RO or a secondary RO.

9. The user equipment of any of the previous claims, wherein the PRACH preamble is transmitted as one or more of the following:

- part of a contention-based RA procedure; or
- part of the first step of a 2-step or 4-step RA procedure.

10. A network device comprising:

- means for transmitting, to a user equipment, configuration information organizing a set of a random access channel, RACH, occasions, ROs, into primary and secondary ROs;
- means for transmitting, to the user equipment, a status indicating whether physical random access channel, PRACH, detection is performed by the network device for the secondary ROs; and
- means for performing PRACH detection according to the configuration information and the status.

11. The network device of claim 10, wherein the set of ROs corresponds to one of:

- a PRACH configuration period;
- an association period;
- an association pattern period; or
- a fixed time period.

12. The network device of claim 10 or 11, wherein the set of ROs comprises at least one primary RO for each synchronization signaling block, SSB, and/or at least one secondary RO for each SSB.

13. The network device of any of claims 10-12 wherein the status is transmitted via one or more of the following:

- broadcast signaling;
- a short paging message;
- downlink control information, DCI;
- a group-common downlink control information, DCI;
- a paging physical downlink shared channel, PDSCH, transmission;

- dedicated signaling.

14. The network device of any of the claims 10-13, wherein one or more of the following:

  - primary ROs are ROs for which the network device is expected to perform PRACH detection;
  - secondary ROs are ROs for which the network device is not expected to always perform PRACH detection;
  - secondary ROs are allowed to have a different availability than primary ROs; and
  - secondary ROs are allowed to have a lower availability than primary ROs.
  - primary ROs are time domain resources usable for UL transmission only; or
  - secondary ROs are time domain resources usable for UL transmission and DL reception.

15. The network device of any of claims 10-14, further comprising:

  - means for receiving, from the user equipment, information indicating that a RA procedure using one or more secondary ROs was unsuccessful; and
  - means for, responsive to receiving the information indicating that the RA procedure was unsuccessful, starting performing PRACH detection during the secondary ROs.

16. The network device of claim 15, wherein the information indicating that the RA procedure was unsuccessful is received as part of a subsequent RA procedure.

17. A method, performed by at least one user equipment, the method comprising:

  - receiving, from a network device, configuration information organizing a set of a random access channel, RACH, occasions, ROs into primary and secondary ROs;
  - receiving, from the network device, a status indicating whether physical random access channel, PRACH, detection is performed by the network device during the secondary ROs; and
  - transmitting a PRACH preamble based on the received configuration information and the received status.

18. A method, performed by at least one network device, the method comprising

  - transmitting, to a user equipment, configuration information organizing a set of a random access channel, RACH, occasions, ROs into primary and secondary ROs;
  - transmitting, to the user equipment, a status indicating whether physical random access channel, PRACH, detection is performed by the network device for the secondary ROs; and
  - performing PRACH detection according to the configuration information and the status.

19. Computer program code, the computer program code when executed by a processor of an apparatus causing said apparatus to perform a method of claim 17 or 18.

20. Computer storage medium comprising computer program code of claim 19.

Fig.1

EP 4 543 127 A1

200

UE

gNB

Random Access Request (MSG1)
201

Random Access Response (MSG2)
202

UL Scheduled Transmission (MSG3)
203

Contention Resolution (MSG4)
204

Contention Based Random Access (CBRA)

Fig.2

| ssb-perRACH-Occasion (N) | CB-PreamblesPerSSB (R) | totalNumberOfRA-Preambles ($N_{preamble}^{total}$) |
|---|---|---|
| 1 | 16 | 16 |

PRACH preamble index applicable for an SSB

| SSB | Preamble idx |
|---|---|
| 0 | 0,...,15 |

Fig.3a

EP 4 543 127 A1

| ssb-perRACH-Occasion (N) | CB-PreamblesPerSSB (R) | totalNumberOfRA-Preambles ($N_{preamble}^{total}$) |
|---|---|---|
| 1/8 | 40 | 40 |

PRACH preamble index applicable for an SSB

| SSB | PRACH occasion | | | | | | |
|---|---|---|---|---|---|---|---|
| | 1 | 2 | 3 | 4 | 5 | 6 | 7 |
| | Preamble idx | | | | | | |
| 0 | 0,...,39 | | | | | | |

Fig.3b

| ssb-perRACH-Occasion (N) | CB-PreamblesPerSSB (R) | totalNumberOfRA-Preambles ($N_{preamble}^{total}$) |
|---|---|---|
| 8 | 8 | 64 |

PRACH preamble index applicable for an SSB

| SSB | Preamble idx |
|---|---|
| 0 | 0,...,7 |
| 1 | 8,...,15 |
| 2 | 16,...,23 |
| 3 | 24,...,31 |
| 4 | 32,...,39 |
| 5 | 40,...,47 |
| 6 | 48,...,55 |
| 7 | 56,...,63 |

SSB0  SSB1  SSB2  SSB3  SSB4  SSB5  SSB6  SSB7

Occasion

Fig.3c

400

┌─────────────────────────────────────────────────────────────┐
│ transmit configuration information organizing a set of a RACH occasions, │ ⌐401
│ ROs, into primary and secondary ROs │
└─────────────────────────────────────────────────────────────┘

┌─────────────────────────────────────────────────────────────┐
│ determine that load is sufficiently low/high, decide to enter/leave │ ⌐402
│ energy saving mode and │
│ stop/start performing PRACH detection in one or more secondary ROs │
└─────────────────────────────────────────────────────────────┘

┌─────────────────────────────────────────────────────────────┐
│ transmit a status indicating whether PRACH detection is performed by │ ⌐403
│ the network device for the secondary ROs │
└─────────────────────────────────────────────────────────────┘

┌─────────────────────────────────────────────────────────────┐
│ perform PRACH detection according to the configuration information and │ ⌐404
│ the status │
└─────────────────────────────────────────────────────────────┘

┌─────────────────────────────────────────────────────────────┐
│ receive information that UEs have tried to perform random access in │ ⌐405
│ secondary ROs without success │
└─────────────────────────────────────────────────────────────┘

┌─────────────────────────────────────────────────────────────┐
│ decide to start performing PRACH detection in one or more secondary │ ⌐406
│ ROs │
└─────────────────────────────────────────────────────────────┘

┌─────────────────────────────────────────────────────────────┐
│ transmit a status indicating whether PRACH detection is performed by │ ⌐407
│ the network device for the secondary ROs │
└─────────────────────────────────────────────────────────────┘

Fig.4

_500_

_501_

receive configuration information organizing a set of a RACH occasions, ROs, into primary and secondary ROs

_502_

determine that there is a need to perform an RA procedure and to send a PRACH preamble

_503_

receive a status indicating whether PRACH detection is performed by the network device during the secondary ROs

_504_

transmit a PRACH preamble based on the received configuration information and the received status

_505_

Transmit information indicating that a RA procedure using secondary ROs was unsuccessful

Fig.5

604 — Communication Interface

600

601 — Processor

602 — Program Memory

603 — Main Memory

Fig.6

704 — Communication Interface

700

701 — Processor

702 — Program Memory

703 — Main Memory

Fig.7

800

801

802

803

804

805

806

Fig.8

Europäisches
Patentamt

European
Patent Office

Office européen
des brevets

## EUROPEAN SEARCH REPORT

Application Number

EP 23 20 4935

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2023/193802 A1 (VIVO MOBILE COMMUNICATION CO LTD [CN]) 12 October 2023 (2023-10-12) * page 5, line 7 – line 23 * * page 6, line 3 – line 19 * * page 7, line 19 * * page 7, line 41 – page 8, line 10 * ───── | 1-5, 8-14, 17-20 | INV. H04W74/00 ADD. H04W74/0833 |
| Y | US 2023/116354 A1 (ABEDINI NAVID [US] ET AL) 13 April 2023 (2023-04-13) * paragraph [0090] – paragraph [0092] * * figure 7 * ───── | 1-5, 8-14, 17-20 | |
| A | WO 2022/203787 A1 (QUALCOMM INC [US]) 29 September 2022 (2022-09-29) * paragraph [0061] * * paragraph [0078] – paragraph [0085] * * figure 4 * ───── | 1-20 | |
| A | US 2021/392697 A1 (SAKHNINI IYAB ISSAM [US] ET AL) 16 December 2021 (2021-12-16) * paragraph [0075] – paragraph [0076] * ───── | 1-20 | TECHNICAL FIELDS SEARCHED (IPC) H04W |

The present search report has been drawn up for all claims

| Place of search | Date of completion of the search | Examiner |
|---|---|---|
| Munich | 12 March 2024 | Hartweg, Norman |

EPO FORM 1503 03.82 (P04C01)

## ANNEX TO THE EUROPEAN SEARCH REPORT
## ON EUROPEAN PATENT APPLICATION NO.

EP 23 20 4935

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2024

| Patent document cited in search report | Publication date | Patent family member(s) | Publication date |
|---|---|---|---|
| WO 2023193802 A1 | 12-10-2023 | CN 116939652 A<br>WO 2023193802 A1 | 24-10-2023<br>12-10-2023 |
| US 2023116354 A1 | 13-04-2023 | US 2023116354 A1<br>WO 2023060073 A1 | 13-04-2023<br>13-04-2023 |
| WO 2022203787 A1 | 29-09-2022 | CN 116998212 A<br>EP 4316142 A1<br>US 2022312487 A1<br>WO 2022203787 A1 | 03-11-2023<br>07-02-2024<br>29-09-2022<br>29-09-2022 |
| US 2021392697 A1 | 16-12-2021 | US 2021392697 A1<br>WO 2021253033 A1 | 16-12-2021<br>16-12-2021 |

EPO FORM P0459

For more details about this annex : see Official Journal of the European Patent Office, No. 12/82